# EUROPEAN PATENT APPLICATION

(11) **EP 4 693 718 A1**
(43) Date of publication of application: **11.02.2026**
(21) Application number: 23943488.9
(22) Date of filing: 27.12.2023
(51) Int. Cl.: H01M 50/593, H01M 50/15

(54) **SECONDARY BATTERY AND ELECTRIC DEVICE**

(30) Priority: 28.06.2023 CN 202321669800 U
(71) Applicant: Sunwoda Mobility Energy Technology Co., Ltd., Shenzhen, Guangdong 518107 (CN)
(72) Inventor: GUO, Zhenhua, Shenzhen, Guangdong 518107 (CN); HU, Mingjiang, Shenzhen, Guangdong 518107 (CN); YANG, Wei, Shenzhen, Guangdong 518107 (CN)
(74) Representative: Elzaburu S.L.P.
(86) International application number: PCT/CN2023/142328
(87) International publication number: WO 2025/001017

(57) **Abstract**

A secondary battery includes an electrode assembly and a top cover assembly (500), the electrode assembly includes a cell body (100) and an insulating member (300), and the top cover assembly includes a lower plastic member (510). The insulating member (300) is provided on the lower plastic member (510) and in contact with the cell body (100), to increase a contact area between the cell body (100) and other components, and reduce the pressure imposed on the cell body (100) under conditions such as vibration. A side of the lower plastic member (510) near the insulating member (300) is provided with a positioning step (511) and the insulating member (300) can be mated to the positioning step (511), to form a relative positioning between the lower plastic member (510) and the insulating member (300).

## Description

### CROSS-REFERENCE TO RELATED APPLICATIONS

The present application claims priority to Chinese patent application No. 202321669800.3, filed with China National Intellectual Property Administration on June 28, 2023, and entitled "Secondary Battery and Electric Device", which is hereby incorporated by reference in its entirety.

### TECHNICAL FIELD

The present application relates to, but is not limited to, the technical field of power batteries, and in particular to a secondary battery and an electric device.

### BACKGROUND

In a secondary battery, contact area between a lower plastic member and a cell body is relatively small. As a result, under vibration or inversion conditions, the region of the cell body in contact with the lower plastic member is subjected to high pressure, which may lead to crush damage to electrode sheets, and further affect performance and safety of the cell.

### TECHNICAL SOLUTION

Embodiments of the present application provide a secondary battery and an electric device, to increase contact area between an end surface of a cell body and other components.

The embodiments of the present application provide a secondary battery, which has a height direction and includes an electrode assembly and a top cover assembly; the electrode assembly includes a cell body and an insulating member sequentially provided along the height direction; the cell body is provided at a side of the insulating member away from the top cover assembly, and the cell body and the insulating member are at least partially attached with each other; the top cover assembly includes a lower plastic member, and the lower plastic member is connected to a side of the insulating member away from the cell body; where an end surface of the cell body near the insulating member is a first surface, and the first surface has an area of S₁; an end surface of the insulating member near the cell body is a second surface, and the second surface is at least partially attached with the first surface; an area where the second surface is attached with the first surface is S₂, and a contact area between the lower plastic member and the first surface is S₃; the S₁, the S₂, and the S₃ satisfy: 0.272 < (S₂ + S₃) : S₁ ≤ 0.761.

Optionally, the S₁, the S₂, and the S₃ satisfy: 0.352 ≤ (S2 + S3) : S1 ≤ 0.577.

Optionally, the S₂ is provided to satisfy: 600 mm² ≤ S₂ ≤ 1300 mm².

Optionally, the S₃ is provided to satisfy: 200 mm² ≤ S₃ ≤ 5000 mm².

Optionally, a side of the lower plastic member near the insulating member is provided with a positioning step, and the insulating member is mated to the positioning step.

Optionally, the secondary battery has a length direction, the insulating member is provided with a first connecting part and a second connecting part spaced apart along the length direction, and the first connecting part and the second connecting part are connected through a third connecting part; the second surface includes end surfaces of the first connecting part, the second connecting part, and the third connecting part near the cell body; the positioning step includes a first step part and a second step part spaced apart along the length direction, and a recessed area is provided between the first step part and the second step part; the first connecting part is fixed to the first step part, and the second connecting part is fixed to the second step part; where the height direction and the length direction are perpendicular to each other.

Optionally, the first connecting part is provided with a first positioning part, the first step part is provided with a first mating part, and the first positioning part is in mating connection with the first mating part.

Optionally, the second connecting is provided with a second positioning part, the second step part is provided with a second mating part, and the second positioning part is in mating connection with the second mating part.

Optionally, when the first positioning part and the first mating part are provided, one of the first positioning part and the first mating part is a snap-fit protrusion, and the other of the first positioning part and the first mating part is a snap-fit groove.

Optionally, when the second positioning part and the second mating part are provided, one of the second positioning part and the second mating part is a snap-fit protrusion, and the other of the second positioning part and the second mating part is a snap-fit groove.

Optionally, clearance slots are provided at a connection between the third connecting part and the first connecting part, as well as at a connection between the third connecting part and the second connecting part, respectively; tabs are provided on the cell body and extend through the clearance slots, respectively.

Optionally, the secondary battery further has a width direction, and the third connecting part is provided with a first portion and a second portion; where the first portion is near the first connecting part and has a dimension L1 in the width direction, with the L1 decreasing along the length direction; the second portion is near the second connecting part and has a dimension L2 in the width direction, with the L2 increasing along the length direction; where the width direction, the length direction, and the height direction are mutually perpendicular to each other.

Optionally, the secondary battery further has a width direction, where the length direction, the width direction, and the height direction are mutually perpendicular to each other, and an end of the cell body near the insulating member in the height direction is provided with tabs; the first connecting part and the second connecting part are spaced apart along the length direction; the insulating member further includes limit parts, and the limit parts are located on both sides of the third connecting part along the width direction, respectively; the limit parts protrude toward a direction near the top cover assembly, and end surfaces of the limit parts near the cell body are in contact with the tabs, respectively.

Optionally, the insulating member is provided with an opening, and the opening penetrates through the insulating member along the height direction.

Correspondingly, the embodiments of the present application provide an electric device, including the secondary battery described above; the top cover assembly further includes a top cover sheet, and the lower plastic is located on a side of the top cover sheet near the cell body.

In the embodiments of the present application, the insulating member is provided in the secondary battery. The insulating member is disposed on the lower plastic and contacts with the end surface of the cell body near the insulating member, thereby increasing the contact area between the end surface of the cell body and other components. Consequently, under vibration or inversion conditions, the pressure exerted on the cell body can be reduced accordingly to avoid crush damage.

Additionally, in some embodiments, the step positioning part can be provided on the insulating member for positioning the insulating member, and a snap-fit structure can be correspondingly provided between the step positioning part and the insulating member, to further position and fix the insulating member, preventing shaking or displacement of the insulating member, thereby enhancing the operational stability of the insulating member.

### BRIEF DESCRIPTION OF DRAWINGS

To describe the technical solutions in embodiments of the present application more clearly, the following briefly introduces the accompanying drawings needed for describing the embodiments. Apparently, the accompanying drawings in the following description illustrate merely some embodiments of the present application, and those skilled in the art may still derive other drawings from these accompanying drawings without creative effort.
FIG. 1 exemplarily shows a schematic structural diagram of a secondary battery.
FIG. 2 exemplarily shows a schematic structural diagram of a lower plastic member.
FIG. 3 exemplarily shows a schematic structural diagram of an insulating member in Example 6.
FIG. 4 exemplarily shows a schematic structural diagram of an insulating member in Example 7.
FIG. 5 exemplarily shows a schematic structural diagram of an insulating member in Example 8.
FIG. 6 exemplarily shows a schematic structural diagram of an insulating member in Example 9.
FIG. 7 exemplarily shows a schematic structural diagram of an insulating member in Example 10.
FIG. 8 exemplarily shows a schematic structural diagram of an insulating member in Example 11.
FIG. 9 exemplarily shows a schematic diagram of cooperation between an insulating member and a top cover assembly in Example 12.
FIG. 10 exemplarily shows a schematic structural diagram of the insulating member in Example 12.
FIG. 11 exemplarily shows a schematic partial enlarged diagram of FIG. 10.
FIG. 12 exemplarily shows a top view of the insulating member in Example 12.
FIG. 13 exemplarily shows a sectional view taken along B-B of FIG. 12.
FIG. 14 exemplarily shows a schematic partial enlarged diagram of FIG. 13.
FIG. 15 exemplarily shows a top view of an insulating member in Example 13.
FIG. 16 exemplarily shows a sectional view taken along A-A of FIG. 15.
FIG. 17 exemplarily shows a schematic partial enlarged diagram of FIG. 16.
FIG. 18 exemplarily shows an exploded view of a secondary battery.

**Reference signs for main components in the embodiments of the present application:**

| | | | |
|---|---|---|---|
| Cell body | 100 | First surface | 110 |
| Tab | 120 | Insulating member | 300 |
| Second surface | 310 | First connecting part | 320 |
| First positioning part | 321 | Second connecting part | 330 |
| Third connecting part | 340 | First portion | 341 |
| Second portion | 342 | Limit part | 350 |
| Opening | 360 | Clearance slot | 370 |
| Top cover assembly | 500 | Lower plastic member | 510 |
| Positioning step | 511 | First step part | 5111 |
| Second step part | 5112 | Recessed area | 512 |
| First mating part | 520 | Second mating part | 530 |
| Top cover | | | 540 |

### DESCRIPTION OF EMBODIMENTS

The technical solutions in the embodiments of the present application will be clearly and comprehensively described hereinafter with reference to the accompanying drawings in the embodiments of the present application. Apparently, the embodiments described are merely a part rather than all of the embodiments of the present application. All other embodiments obtained by those skilled in the art based on the embodiments of the present application without making creative labor shall fall within the protection scope of the present application. In addition, it should be understood that the specific embodiments described herein are only for illustration and explanation purposes and not intended to limit the present application. In the present application, unless otherwise specified, directional terms such as "upper," "lower," "left," and "right" generally refer to the actual orientations (upper, lower, left and right) of a device during use or operation, specifically to the directions shown in the accompanying drawings.

In addition, the terms "first" and "second" are used only for the purpose of description and should not be interpreted as indicating or implying relative importance, and should not be interpreted as implying the quantity of the technical feature indicated. Thus, the feature defined with "first" and "second" may explicitly or implicitly include at least one such feature.

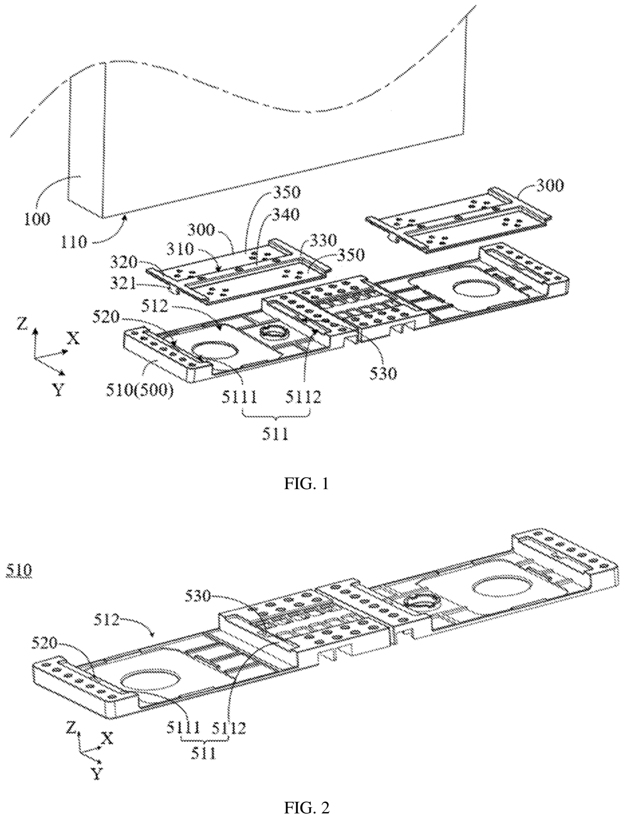

Embodiments of the present application provide a secondary battery. Referring to FIG. 1, the secondary battery includes an electrode assembly and a top cover assembly 500. Moreover, in the embodiments of the present application, in order to facilitate the description of the positional relationships between components of the present application as well as the shape and structure of individual components, a length direction X, a width direction Y, and a height direction Z of the secondary battery are defined, where the length direction X, the width direction Y, and the height direction Z are mutually perpendicular. Exemplarily, herein, the top cover assembly 500 is provided at one end of the electrode assembly in the height direction Z.

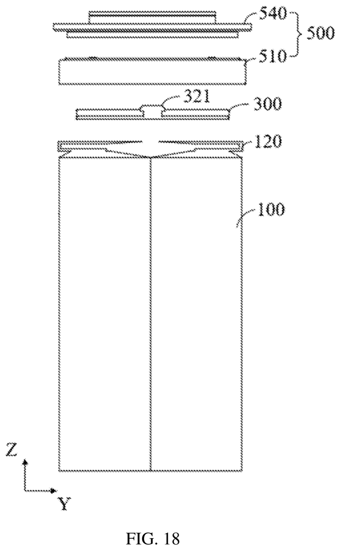

The electrode assembly includes a cell body 100 and a tab 120 (see FIG. 18), where the tab 120 is connected to the cell body 100. Exemplarily, herein, the tab 120 is provided on a side of the cell body 100 near the top cover assembly 500 along the height direction Z. Herein, the cell body 100 can be a cell body 100 formed by winding, a stacked cell body 100 formed by stacking, or a cell body 100 in other forms. The examples in this embodiment do not impose undue limitations on this.

In the height direction Z, a lower plastic member 510 is connected to an end portion of the cell body 100 near the top cover assembly 500. Please continue to refer to FIG. 1, the top cover assembly 500 includes the lower plastic member 510, as well as an electrode terminal and a top cover sheet 540. The electrode terminal is electrically connected to the tab 120. The lower plastic member 510 is provided between the top cover sheet 540 and the cell body 100, and serves as an insulating plastic component to prevent the secondary battery from short circuit.

Herein, the inventors of the present application have discovered that, there is a relatively small contact area between the lower plastic member 510 and the cell body 100, due to the limitation on the space required for the tab 120. As a result, when the secondary battery is subjected to external forces under conditions such as vibration or inversion, the pressure in the contact area between the cell body 100 and the lower plastic member 510 is relatively high. Such high pressure may introduce crush damage to the cell body 100, thereby affecting the performance and safety of the secondary battery.

In view of this, in the embodiments of the present application, the electrode assembly further includes an insulating member 300. The cell body 100 is provided at a side of the insulating member 300 away from the top cover assembly 500, where the cell body 100 and the insulating member 300 are at least partially attached to each other. The insulating member 300 is provided at a side of the cell body 100 near the top cover assembly 500 in the height direction Z, while the afore-mentioned lower plastic member 510 is connected to a side of the insulating member 300 away from the cell body 100 in the height direction Z.

Exemplarily, please referring to FIG. 1, in some embodiments of the present application, a positioning step 511 is provided on a side of the lower plastic member 510 near the insulating member 300. The insulating member 300 can be mated to the positioning step 511 to form relative positioning between the lower plastic member 510 and the insulating member 300. Generally, the position of the positioning step 511 is corresponding to the area where the tab is located. That is, the positioning steps 511 are provided at the positions corresponding to a negative electrode tab and a positive electrode tab, respectively. Certainly, the example in this embodiment does not impose undue limitations on this.

Herein, furthermore, referring to FIG. 2, the positioning step 511 includes a first step part 5111 and a second step part 5112 spaced apart in the length direction X, and the first step part 5111 and the second step part 5112 can be configured to position two ends of the insulating member 300 in the length direction X, respectively. Herein, a recessed area 512 is formed between the first step part 5111 and the second step part 5112 spaced apart, where the projection of the recessed area 512 in the height direction Z covers the tab 120, to be configured to provide clearance for the tab 120.

Certainly, it can be understood that in other embodiments, the positioning step 511 may have only one step part or more step parts. For example, the positioning step 511 may have a step part provided circumferentially around the insulating member 300 in a XY plane. It is sufficient as long as the positioning step 511 can be mated with the insulating member 300 to position the insulating member 300. The examples in this embodiment do not impose undue limitations on the present application.

Please continue to refer to FIG. 1, herein, the insulating member 300 is provided at the position corresponding to the tab. Generally, the insulating members are provided at the positions corresponding to the negative electrode tab and the positive electrode tab, respectively. In other words, the insulating members 300 are provided at the positions corresponding to a negative terminal and a positive terminal (not shown in the drawings) included in the top cover assembly 500. Certainly, the example in this embodiment does not impose undue limitations on this.

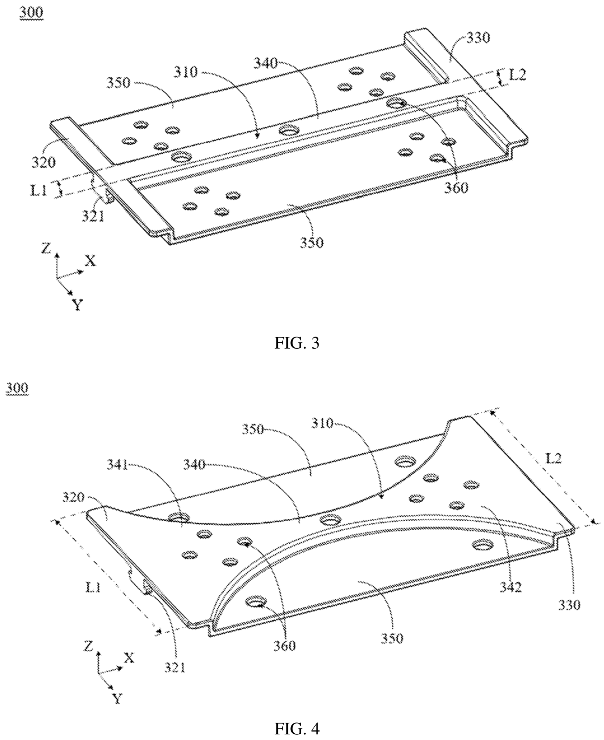

Please referring to FIG. 3, corresponding to the positioning step 511, the insulating member 300 has a first connecting part 320 and a second connecting part 330 spaced apart in the length direction X. The first connecting part 320 and the second connecting part 330 are connected through a third connecting part 340. Please in combination with FIG. 1, the first connecting part 320 can be mated to the first step part 5111, and the second connecting part 330 can be mated to the second step part 5112, thereby forming relative positioning between the insulating member 300 and the lower plastic member 510.

Herein, in order to fix the insulating member 300 to the lower plastic member 510, a first mating part 520 may further be provided in the first step part 5111 in some embodiments, as shown in FIG. 2. In addition, as shown in FIG. 2, the first mating part 520 is a snap-fit groove.

Correspondingly, please referring to FIG. 3, the first connecting part 320 is provided with a first positioning part 321, corresponding to the first mating part 520 which is a snap-fit groove, the first positioning part 321 is a snap-fit protrusion. Thus, in combination with FIG. 1, the first positioning part 321 can be mated to the first mating part 520 by snap-fitting, thereby fixing the first connecting part 320 to the first step part 5111. By this manner, the first connecting part 320 can be conveniently connected to and detached from the first step part 5111. That is, the plastic member is conveniently assembled to and disassembled from the lower plastic member 510.

It can be understood that, in the examples of the afore-mentioned embodiments, the first positioning part 321 being a snap-fit protrusion and the first mating part 520 being a snap-fit groove are taken as an example for exemplary illustration. However, in other embodiments, the first positioning part 321 may be a snap-fit groove and the first mating part 520 may be a snap-fit protrusion. This embodiment does not impose undue limitations on this. Alternatively, in other embodiments, the first connecting part 320 and the first step part 5111 may also be fixed by other fixing methods, such as adhesive bonding, thermal fusion bonding, screw connection, etc.

Similarly, the second step part 5112 can be provided with a second mating part 530. Correspondingly, the second connecting part 330 can be provided with a second positioning part. The second positioning part can be in mating connection with the second mating part 530 to fix the second connecting part 330 to the second step part 5112. Herein, one of the second positioning part and the second mating part 530 is a snap-fit protrusion, and the other is a snap-fit groove, thereby conveniently achieving the mating connection between the second connecting part 330 and the second step part 5112 by snap-fit. That is, the plastic member is conveniently assembled to and disassembled from the lower plastic member 510. Certainly, similar to the mating connection between the first connecting part 320 and the first step part 5111 described above, the mating connection between the second connecting part 330 and the second step part 5112 may be in a different manner in other embodiments. The examples of this the embodiment do not impose undue limitations on the present application.

Certainly, it can be understood that the first connecting part 320 and the first mating part 520 as well as the second connecting part 330 and the second mating part 530 can be provided together, or only one group thereof can be provided, such as only the first connecting part 320 and the first mating part 520 can be provided, or only the second connecting part 330 and the second mating part 530 can be provided. The examples in this embodiment do not impose undue limitations on the present application.

The connection relationship between the lower plastic member 510 and the insulating member 300 has been exemplarily illustrated in the above examples. Certainly, it can be understood that in other embodiments of the present application, the connection manner between the lower plastic member 510 and the insulating member 300 is not limited to the above, it is sufficient as long as the two can be relatively fixed to each other. The examples in this embodiment do not impose undue limitations on the present application.

As mentioned above, the insulating member 300 is connected to the lower plastic member 510, while the end surface of the insulating member 300 near the cell body 100 is attached with the cell body 100, which indirectly increases the contact area between the lower plastic member 510 and the cell body 100, enhancing protection for the cell body 100 when the secondary battery is subjected to the conditions such as vibration and inversion.

Where, please continue to refer to FIG. 1, in some embodiments of the present application, an end surface of the cell body 100 near the insulating member 300 is defined as a first surface 110, and an area of the first surface 110 is defined as S₁. An end surface of the insulating member 300 near the cell body 100 is defined as a second surface 310, at least a portion of the second surface 310 is attached with the first surface 110. Herein, an area where the second surface 310 is attached with the first surface 110 is defined as S₂. Further, a contact area between the lower plastic member 510 and the first surface 110 is defined as S₃.

Where, taking the afore-mentioned insulating member 300 having the first connecting part 320, the second connecting part 330, and the third connecting part 340 as an example, the second surface 310 is a combination of end surfaces of the first connecting part 320, the second connecting part 330, and the third connecting part 340 near the cell body 100. A third surface is substantially an end surface of the lower plastic member 510 near the cell body 100 after the areas of the recessed area 512 and the positioning step 511 as described above are removed.

Where, the area of S₁ can be determined by identifying a projected shape formed by the projection of the first surface 110 onto a XY plane, measuring the corresponding dimensions with a vernier caliper, and calculating the area using the area formula, or directly measuring the area of this region with an area measuring instrument. The S2 can be determined by identifying a projected shape formed by the projection of a contact region between the second surface 310 and the first surface 110 onto the XY plane, measuring the corresponding dimensions with a vernier caliper, and calculating the area using the area formula, or directly measuring the area of this region with an area measuring instrument. It should be noted that for the contact region between the second surface 310 and the first surface 110, an enclosed outer contour line for the contact region between the insulating member 300 and the first surface 110 can be marked on the first surface 110 with a marker, and an enclosed shape formed by the outer contour line is the contact region between the second surface 310 and the first surface 110. If there are multiple contact regions, each is marked to form multiple enclosed shapes, and a sum of areas of the projected shapes of the multiple enclosed shapes on the XY plane is regarded as the S2. Similarly, the S3 can be determined by identifying a projected shape formed by the contact region between the lower plastic member 510 and the first surface 110 on the XY plane, measuring the corresponding dimensions with a vernier caliper, and calculating the area using the area formula, or directly measuring the area of this region using an area measuring instrument. It should be noted that for the contact region between the lower plastic member 510 and the first surface 110, an enclosed outer contour line for the contact region between the lower plastic member 510 and the first surface 110 can be marked on the first surface 110 with a marker, and an enclosed shape formed by the outer contour line is the contact region between the lower plastic member 510 and the first surface 110. If there are multiple contact regions, each is marked to form multiple enclosed shapes, and a sum of areas of the projected shapes of the multiple enclosed shapes on the XY plane is regarded as the S₃.

In some embodiments of the present application, the S₁, the S₂, and the S₃ are configured to satisfy the following condition: 0.272 ≤ (S₂ + S₃) : S₁ ≤ 0.761, so as to reduce the pressure on the cell body 100 when subjected to forces while ensuring sufficient insulation at the connection between the lower plastic member 510 and the cell body 100 inside the secondary battery, sufficient current-carrying area of the tab 120, and better connection strength between the insulating member 300 and the lower plastic member 510. For example, the value of (S₂+S₃): S₁ can be 0.272, 0.273, 0.275, 0.28, 0.29, 0.3, 0.35, 0.5, 0.65, 0.7, 0.75, 0.755, 0.758, 0.76, 0.761, or within a range composed of any two of the afore-mentioned values.

Herein, when the ratio of (S₂+S₃) to S₁ is less than 0.272, there is sufficient space between the top cover assembly 500 and the cell body 100 for accommodating the tab 120, thus allowing the tab 120 to have an adequate current-carrying area. However, the contact area between the lower plastic member 510 and the insulating member 300 and the cell body 100 is relatively small, and the pressure distributed unevenly may cause crush damage to the cell body 100. When the ratio of (S₂+S₃) to S₁ is greater than 0.761, the contact area between the lower plastic member 510 and the insulating member 300 and the cell body 100 is sufficient, and the pressure distributed evenly is less likely to cause crush damage to the cell body 100. However, this will result in a smaller space for accommodating the tab 120, which may lead to insufficient current-carrying area of the tab 120. In view of this, in the embodiments of the present application, the ratio of (S₂+S₃) to S₁ is provided within the range of 0.272-0.761, which helps ensure the current-carrying ability of the tab 120 while avoiding the crush damage to the cell body 100.

Furthermore, in some optional embodiments, the S₁, the S₂, and the S₃ are configured to satisfy the following condition: 0.352 ≤ (S₂ + S₃) : S₁ ≤ 0.577. For example, the value of (S₂+S₃): S₁ is 0.352, 0.353, 0.355, 0.36, 0.4, 0.45, 0.5, 0.57, 0.573, 0.575, 0.576, 0.577, or within a range composed of any two of the afore-mentioned values. It can be understood that, the example in this embodiment does not exhaustively list all relevant numerical examples. That is, the related examples in this embodiment do not impose undue limitations on the present application.

Herein, in some embodiments, based on that 0.272 ≤ (S₂+S₃):S₁ ≤ 0.761 is satisfied, S₂ is provided to satisfy: 600 mm² ≤ S₂ ≤ 1300 mm². Thus, by limiting the size of the area where the second surface 310 is attached with the first surface 110, the dimensions of the insulating member 300 can be accordingly determined, protecting the tab 120 and enhancing connection strength.

In some embodiments, based on that 0.272 ≤ (S₂+S₃):S₁ ≤ 0.761 is satisfied, or both 0.272 ≤ (S₂+S₃):S₁ ≤ 0.761 and 600 mm² ≤ S₂ ≤ 1300 mm² are satisfied, S3 is provided to satisfy: 200 mm² ≤ S₃ ≤ 5000 mm². Thus, this configuration ensures that the lower plastic member 510 in the embodiments of the present application has excellent insulation while having no excessive limitations on the size of the tab 120, thereby ensuring the current-carrying area of the tab 120.

Examples 1-5 and Comparative Examples 1-4 are provided hereinafter. In Examples 1-5, the secondary batteries in Examples 1-5 are provided with the afore-mentioned insulating member 300, with relevant parameters satisfying the condition 0.272 ≤ (S₂ + S₃) : S1 ≤ 0.761. In Comparative Examples 1-4, although the insulating member 300 is provided, at least one of the following conditions specified in the embodiments of the present application: 0.272 ≤ (S₂+S₃):S₁ ≤ 0.761, 600 mm² ≤ S₃ ≤ 1300 mm², and 2000 mm² ≤ S₁ ≤ 5000 mm² is not satisfied. For specific parameters, please referring to Table 1 below.

**Table 1**

| | S₁ (Unit : mm²) | S₂ (Unit : mm²) | S₃ (Unit : mm²) | (S₂+S₃):S ¹ | Whether the internal insulation is valid | Whether the insulating member can be lapped with the lower plastic member | Whether the current-carry ing area of the tab meets the requirements | Is there any crush damage to the cell body |
|---|---|---|---|---|---|---|---|---|
| Example 1 | 4549 | 1038 | 200 | 0.272 | No | Can | Meet the requirements | No crush damage |
| Example 2 | 7410 | 639 | 5000 | 0.761 | No | Can | Meet the requirements | No crush damage |
| Example 3 | 4668 | 1243 | 400 | 0.352 | No | Can | Meet the requirements | No crush damage |
| Example 4 | 5801 | 1047 | 2300 | 0.577 | No | Can | Meet the requirements | No crush damage |
| Example 5 | 5796 | 1000 | 1950 | 0.509 | No | Can | Meet the requirements | No crush damage |
| Comparative Example 1 | 4500 | 900 | 150 | 0.233 | Yes | Can | Meet the requirements | Crush damaged |
| Comparative Example 2 | 7500 | 900 | 5050 | 0.793 | No | Can | Not meet the requirements | No crush damage |
| Comparative Example 3 | 5000 | 70 | 1000 | 0.214 | No | No | Meet the requirements | Crush damaged |
| Comparative Example 4 | 5000 | 3100 | 1000 | 0.820 | No | Can | Not meet the requirements | No crush damage |

In these embodiments, the size of S1 is provided between 4500-7500. It can be seen from Table 1 that, compared with Comparative Examples 1-4, the secondary batteries in Examples 1-5 of the present application satisfy the ranges of 0.272 ≤ (S₂+S₃):S₁ ≤ 0.761, 600 mm² ≤ S₂ ≤ 1300 mm², and 200 mm² ≤ S₃ ≤ 5000 mm². In these examples, by providing the insulating member 300, the contact area between the top cover assembly 500 and the cell body 100 is increased, thus the cell body is not prone to being crushed when subjected to external forces.

However, in Comparative Example 1, since the S₃ is provided to be smaller, there is an issue that insufficient thermal fusion bonding area of the lower plastic member 510 may lead to insulation failure inside the secondary battery. In Comparative Example 2, since the S3 is provided to be larger, the width of the tab 120 is restricted by the lower plastic member 510, which may result in insufficient current-carrying area of the tab 120. In Comparative Example 3, since the S₂ is provided to be smaller, the insulating member 300 is smaller, making it difficult to be lapped onto the positioning step 511 of the lower plastic member 510. That is, the insulating member 300 cannot be stably connected to the lower plastic member 510. In Comparative Example 4, since the S₂ is provided to be larger, the insulating member 300 is excessively large, particularly the third connecting part 340 of the insulating member 300 has an excessively large area, which may lead to crush damage to the cell body 100.

Additionally, in some embodiments, referring to FIG. 4, the third connecting part 340 includes a first portion 341 and a second portion 342. The first portion 341 is closer to the first connecting part 320 than the second portion 342 and has a dimension L1 along the width direction Y, where the L1 decreases along the length direction X. In some embodiments of the present application, the L1 gradually decreases along the length direction X. The second portion 342 is closer to the second connecting part 330 than the first portion 341 and has a dimension L2 in the width direction Y, where the L2 increases along the length direction X. In some embodiments of the present application, the L2 gradually increases along the length direction X. As a result, the third connecting part 340 has a larger width at both ends and a smaller width in the middle portion in the length direction X. Furthermore, compared to the embodiments where the L1 is a constant smaller dimension and/or the L2 is a constant smaller dimension (e.g., both the L1 and the L2 are constant dimensions as the same as the smaller width dimension of the middle portion of the third connecting part 340 in this embodiment), the third connecting part 340 with two wide ends and a narrow middle, as provided in this embodiment, helps increase the contact area S₂ between the insulating member 300 and the cell body 100, while avoiding large interference with the tab 120 on the cell body 100.

In some embodiments, please referring to FIG. 3, the first connecting part 320 and the second connecting part 330 are spaced apart along the length direction X, and the insulating member 300 further includes limit parts 350. The limit parts 350 are provided on both sides of the third connecting part 340 in the width direction Y, respectively and protrude toward the cover assembly 500. Herein, the limit parts 350, the first connecting part 320, the second connecting part 330, and the third connecting part 340 are an integrally-formed structure, and a side of each limit part 350 near the third connecting part 340 in the width direction Y is connected to the third connecting part 340. Meanwhile, both ends of the limit part 350 in the length direction X are respectively connected to the first connecting part 320 and the second connecting part 330. Certainly, it can be understood that in other embodiments, any one of the first connecting part 320, the second connecting part 330, the third connecting part 340, and the limit part 350 may also be separately prepared and then connected with each other. The examples in this embodiment do not impose undue limitations on this.

Furthermore, herein, an end surface of the limit part 350 near the cell body 100 is in contact with the tab 120, so that the limit part 350 can be used to press against the tab 120 to maintain the flatness of the tab 120. For example, in the case of a bent tab 120, after being bent, the tab 120 has two portions spaced apart, and both the two portions extend along the width direction Y, and thus a gap is provided between the two portions in the height direction Z. The limit part 350 may be positioned at this gap and presses against an inner surface of the gap near the cell body 100. Certainly, the example in this embodiment does not impose undue limitations on the present application.

In some embodiments, please referring to FIG. 3, the insulating member 300 may further be provided with openings 360 that penetrate the insulating member 300 along the height direction Z. Herein, the openings 360 serves for ventilation and/or electrolyte introduction. The openings 360 may be provided in the first connecting part 320, the second connecting part 330, the third connecting part 340, or the limit part 350 described above. The examples in the embodiments do not impose undue limitations on this.

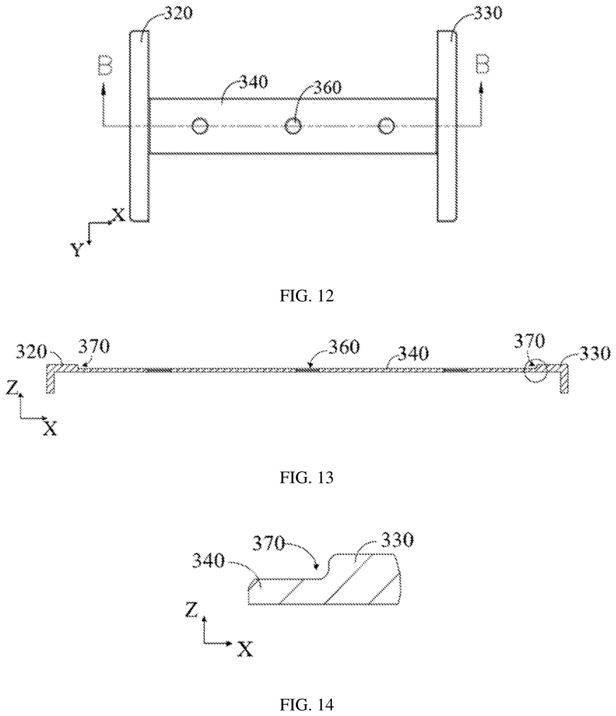

In some embodiments, please referring to FIG. 13, clearance slots 370 are provided at the connection between the third connecting part 340 and the first connecting part 320, as well as at the connection between the third connecting part 340 and the second connecting part 330. For details, referring to the partial enlarged view in FIG. 14, the position of the avoidance slot 370 is shown. During use, the tab 120 provided on the cell body 100 can extend through the avoidance slot 370.

Hereinafter, Examples 6-13 are provided to further exemplify the structure of the insulating member 300.

### Example 6

Please referring to FIG. 3, in Example 6, the insulating member 300 includes a first connecting part 320, a second connecting part 330, and a third connecting part 340. The first connecting part 320 and the second connecting part 330 are respectively connected to two ends of the third connecting part 340 in the length direction X. Where, a width of the third connecting part 340 remains constant in the width direction Y. Furthermore, along the width direction Y, limit parts 350 are provided at both sides of the third connecting part 340.

### Example 7

Please referring to FIG. 4, in Example 7, similarly, the insulating member 300 includes a first connecting part 320, a second connecting part 330, and a third connecting part 340. Herein, the difference from Example 6 is that a width of the third connecting part 340 is variable in the width direction Y. Specifically, at positions near the first connecting part 320 and the second connecting part 330, that is, at positions of a first portion 341 and a second portion 342 on both ends of the third connecting part 340 along the length direction X, the width of the third connecting part 340 in the width direction Y is larger, while at positions away from the first connecting part 320 and the second connecting part 330, the width of the third connecting part 340 in the width direction Y gradually narrows. That is, the widths L1 and L2 are larger at both ends. Moreover, side end surfaces of the third connecting part 340 in the width direction Y are arc-shaped. Thus, compared to Example 6, the contact area between the insulating member 300 and the cell body 100 in this example is larger. That is, the insulating member 300 in this example can provide a larger S₂.

### Example 8

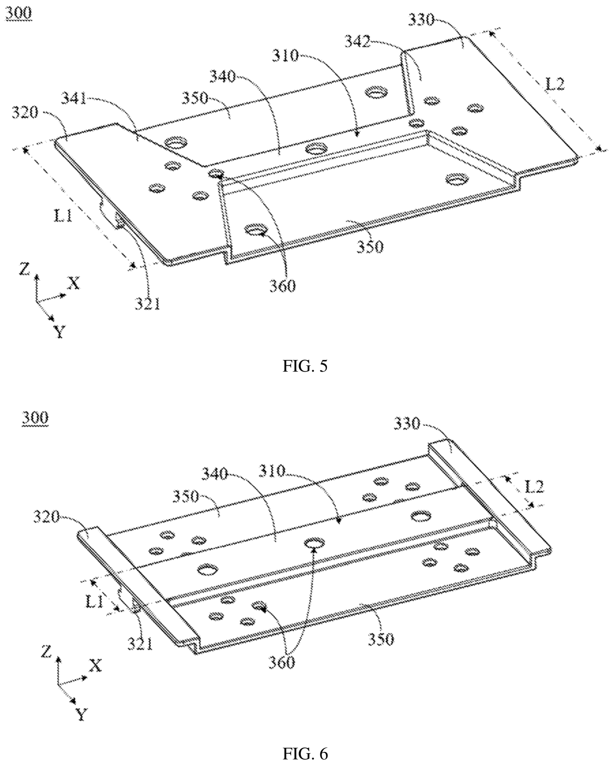

Please referring to FIG. 5, in Example 8, similarly, the insulating member 300 includes a first connecting part 320, a second connecting part 330, and a third connecting part 340. Herein, the difference from Example 6 is that a width of the third connecting part 340 in the width direction Y is variable, which can provide a larger S₂ compared to Example 6. The difference from Example 7 lies in the shape of the third connecting part 340, where the first portion 341 and second portion 342, which are respectively provided on both ends of the third connecting part 340 and are connected to the first connecting part 320 and second connecting part 330, are tapered. That is, the L1 and L2 gradually decrease towards opposite directions. However, a portion connected between the first section 341 and the second section 342 maintains a constant width in the width direction Y. Thus, the third connecting part 340 provides better avoidance effect for the tab 120, and the limit parts 350 have a larger area, offering improved pressing effect on the tab 120 and helping maintain the flatness of the tab 120.

### Example 9

Please referring to FIG. 6, in Example 9, the structure of the insulating member 300 is substantially the same as that in Example 6, except that the width of the third connecting part 340 in the width direction Y is larger, thereby providing a larger S₂.

### Example 10

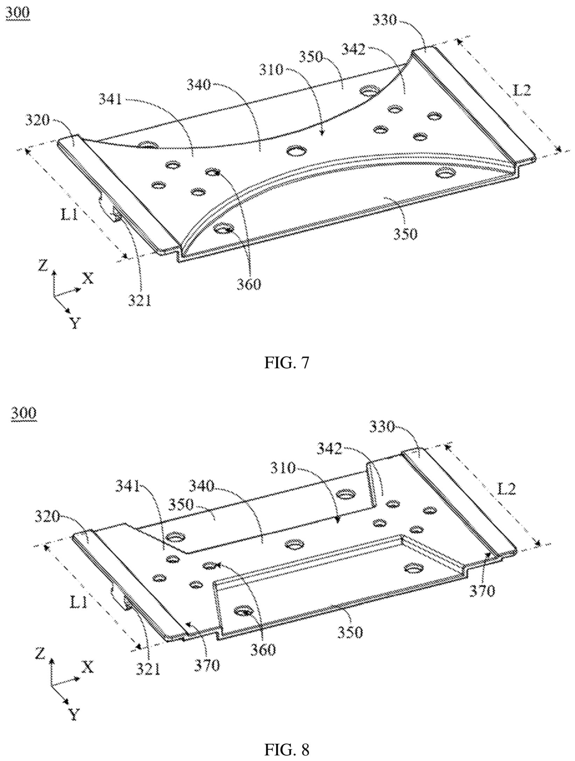

Please referring to Fig. 7, in Example 10, the structure of the insulating member 300 is substantially the same as that in Example 7, except that the width of the third connecting part 340 in the width direction Y is larger, thereby providing a larger S₂.

### Example 11

Please referring to FIG. 8, in Example 11, the structure of the insulating member 300 is substantially the same as that in Example 8, except that clearance slots 370 are provided at the connection between the third connecting part 340 and the first connecting part 320, as well as at the connection between the third connecting part 340 and the second connecting part 330, to allow the tabs 120 to pass through.

### Example 12

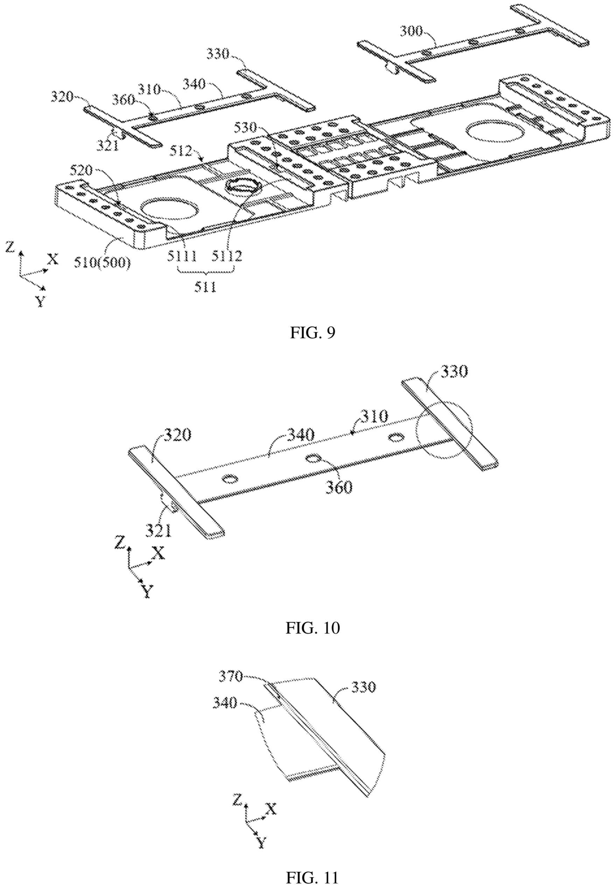

Please referring to FIG. 9, FIG. 10, and FIG. 12, in Example 12, the structure of the insulating member 300 is substantially the same as that in Example 9, except that limit parts 350 are not provided at both sides of the third connecting part 340. Moreover, as shown in FIG. 13, clearance slots 370 are provided at the connection between the third connecting part 340 and the first connecting part 320, as well as at the connection between the third connecting part 340 and the second connecting part 330, to allow the tabs 120 to pass through. Herein, the avoidance slot 370 at the connection between the third connecting part 340 and the second connecting part 330 is further illustrated in FIG. 11 and FIG. 14, and the avoidance slot 370 at the connection between the first connecting part 320 and the second connecting part 330 has a same structure, which is not further illustrated herein.

### Example 13

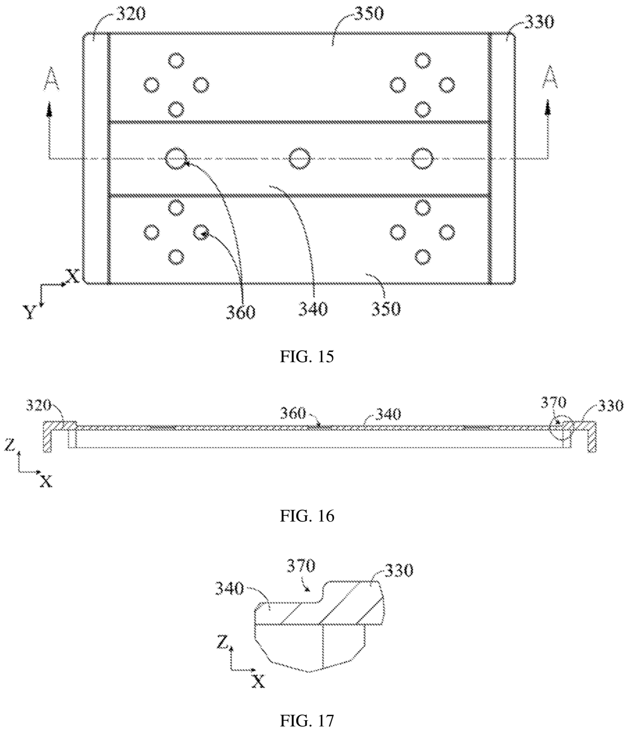

Please referring to FIG. 15, in Example 13, the structure of the insulating member 300 is substantially the same as that in Example 9, except that, as shown in FIG. 16, clearance slots 370 are provided at the connection between the third connecting part 340 and the first connecting part 320, as well as at the connection between the third connecting part 340 and the second connecting part 330, to allow the tabs 120 to pass through. Herein, the avoidance slot 370 at the connection between the third connecting part 340 and the second connecting part 330 is further illustrated in FIG. 17, and the avoidance slot 370 at the connection between the first connecting part 320 and the second connecting part 330 has a same structure, which is not further illustrated herein.

Correspondingly, referring to FIGS. 1 to 17, the embodiments of the present application further provide an electric device, which includes the afore-mentioned secondary battery. Please referring to FIG. 18, the top cover assembly 500 in the secondary battery further includes a top cover sheet 540, with the lower plastic member 510 located on a side of the top cover sheet 540 near the cell body 100.

Additionally, the secondary battery may further include a casing (not shown in the drawings), with a terminal provided on the casing. The terminal is connected to the tab 120 to achieve electrical connection. For example, the terminal can be connected to the tab 120 via a connecting sheet. Certainly, the example in this embodiment does not impose undue limitations on this.

Herein, the secondary battery is used to supply power to the electric device, and the electric device can include electric vehicles, electric motorcycles, electric tools, electric motors, etc. Certainly, the example in this embodiment does not impose undue limitations on the present application.

It can be understood that the meanings of terms in the embodiments of the present application are the same. For details not illustrated in a certain embodiment, the specific implementation details may refer to the description of other embodiments. The exemplary illustrations and technical effects shown in the afore-mentioned embodiments can all be correspondingly achieved. For repeated portions, this embodiment will not provide further description.

The above provides a detailed introduction to the secondary battery and the electric device disclosed in the present application. Specific examples are used herein to illustrate the principles and implementation methods of the present application. The description of the above embodiments is intended to aid in understanding the method and core concepts of the present application. At the same time, for those skilled in the art, based on the concepts of the present application, there may be variations in specific implementation methods and application scopes. Therefore, the content of this specification should not be construed as limiting the scope of the present application.

## Claims

1. A secondary battery, wherein the secondary battery has a height direction and comprises an electrode assembly and a top cover assembly, and the electrode assembly comprises a cell body and an insulating member sequentially provided along the height direction; the cell body is provided at a side of the insulating member away from the top cover assembly, and the cell body and the insulating member are at least partially attached with each other; the top cover assembly comprises a lower plastic member, and the lower plastic member is connected to a side of the insulating member away from the cell body; wherein
an end surface of the cell body near the insulating member is a first surface, and the first surface has an area of S₁;
an end surface of the insulating member near the cell body is a second surface, the second surface is at least partially attached with the first surface, and an area where the second surface is attached with the first surface is S₂;
a contact area between the lower plastic member and the first surface is S₃; the S₁, the S₂, and the S₃ satisfy: 0.272 ≤ (S₂ + S₃) : S₁ ≤ 0.761.

2. The secondary battery according to claim 1, wherein the S₁, the S₂, and the S₃ satisfy: 0.352 ≤ (S₂ + S₃) : S₁ ≤ 0.577.

3. The secondary battery according to claim 1, wherein the S₂ is provided to satisfy: 600 mm² ≤ S₂ ≤ 1300 mm².

4. The secondary battery according to claim 1, wherein the S₃ is provided to satisfy: 200 mm² ≤ S₃ ≤ 5000 mm².

5. The secondary battery according to claim 1, wherein a side of the lower plastic member near the insulating member is provided with a positioning step, and the insulating member is mated to the positioning step.

6. The secondary battery according to claim 5, wherein
the secondary battery has a length direction, the insulating member is provided with a first connecting part and a second connecting part spaced apart along the length direction, and the first connecting part and the second connecting part are connected through a third connecting part; the second surface comprises end surfaces of the first connecting part, the second connecting part, and the third connecting part near the cell body;
the positioning step comprises a first step part and a second step part spaced apart along the length direction, and a recessed region is provided between the first step part and the second step part; the first connecting part is fixed to the first step part, and the second connecting part is fixed to the second step part; wherein the height direction and the length direction are perpendicular to each other.

7. The secondary battery according to claim 6, wherein
the first connecting part is provided with a first positioning part, the first step part is provided with a first mating part, and the first positioning part is in mating connection with the first mating part.

8. The secondary battery according to claim 6, wherein
the second connecting is provided with a second positioning part, the second step part is provided with a second mating part, and the second positioning part is in mating connection with the second mating part.

9. The secondary battery according to claim 6, wherein
when the first positioning part and the first mating part are provided, one of the first positioning part and the first mating part is a snap-fit protrusion, and the other of the first positioning part and the first mating part is a snap-fit groove.

10. The secondary battery according to claim 8, wherein
when the second positioning part and the second mating part are provided, one of the second positioning part and the second mating part is a snap-fit protrusion, and the other of the second positioning part and the second mating part is a snap-fit groove.

11. The secondary battery according to claim 6, wherein clearance slots are provided at a connection between the third connecting part and the first connecting part, and at a connection between the third connecting part and the second connecting part, respectively; tabs are provided on the cell body and extend through the clearance slots, respectively.

12. The secondary battery according to claim 6, wherein
the secondary battery further has a width direction, and the third connecting part is provided with a first portion and a second portion; wherein
the first portion is near the first connecting part and has a dimension L1 in the width direction, with the L1 decreasing along the length direction;
the second portion is near the second connecting part and has a dimension L2 in the width direction, with the L2 increasing along the length direction; where the width direction, the length direction, and the height direction are mutually perpendicular to each other.

13. The secondary battery according to claim 6, wherein
the secondary battery further has a width direction, the length direction, the width direction, and the height direction are mutually perpendicular to each other, and an end of the cell body near the insulating member in the height direction is provided with tabs;
the first connecting part and the second connecting part are spaced apart along the length direction; the insulating member further comprises limit parts, and the limit parts are located on both sides of the third connecting part along the width direction, respectively; the limit parts protrude toward a direction near the top cover assembly, and end surfaces of the limit parts near the cell body are in contact with the tabs, respectively.

14. The secondary battery according to claim 1, wherein the insulating member is provided with an opening, and the opening penetrates through the insulating member along the height direction.

15. An electric device, comprising the secondary battery according to any one of claims 1-14, wherein the top cover assembly further comprises a top cover sheet, and the lower plastic member is located on a side of the top cover sheet near the cell body.
